# EUROPÄISCHE PATENTSCHRIFT

(11) **EP 3 671 001 B1**
(45) Veröffentlichungstag und Bekanntmachung des Hinweises auf die Patenterteilung: **17.03.2021**
(21) Anmeldenummer: 18214253.9
(22) Anmeldetag: 19.12.2018
(51) Int. Cl.: F16M 11/10, F16M 11/20, F16M 13/02, G06F 1/16, F16M 11/42

(54) **HALTERUNG**
MOUNT
FIXATION

(43) Veröffentlichungstag der Anmeldung: 24.06.2020
(73) Patentinhaber: HKS-Systemtechnik GmbH, 33178 Borchen (DE); Conen, Gerd, 54497 Morbach - Gonzerath (DE)
(72) Erfinder: CZECZKA, Andreas, 33100 Paderborn (DE); MONZ, Christian, 55592 Breitenheim (DE)
(74) Vertreter: Schober, Mirko

(56) Entgegenhaltungen:
- EP-A2- 1 584 857
- WO-A1-85/02524
- JP-A- 2003 216 058
- US-A1- 2009 173 847
- US-A1- 2017 231 585

## Beschreibung

Die Erfindung betrifft eine Halterung für Monitore.

Zu Präsentationszwecken werden oftmals mehrere Monitore gleichzeitig eingesetzt. Monitore im Sinne dieser Erfindung sind nicht nur solche, die an einen Rechner angeschlossen werden können, sondern auch solche, die unter Umständen bereits einen Rechner beinhalten. Allgemein werden darunter alle Geräte verstanden, die ein Display aufweisen. Vor allem sind darunter solche Monitore zu verstehen, die Flachbildschirme oder Flachdisplays umfassen, welche üblicherweise auf ihrer Rückseite eine standardisierte Befestigungsmöglichkeit (zum Beispiel VESA) aufweisen, mit welcher sie an der Wand oder eben wie im vorliegenden Fall an eine Halterung befestigt werden können.

So offenbart US 209 173 847 A1 eine Halterung, auf der eine Mehrzahl von Monitoren so angeordnet sind, dass sie für einen Betrachter alle in etwa gleichweit entfernt sind. Dadurch sind die horizontalen Tragschienen in einem Kreisbogen geführt. Die Monitore sind in den Führungen auf Gleitern geführt, wobei zwar erwähnt wird, dass die Monitore auf Rollen geführt werden könnten, doch werden keine weiteren Details hierzu offenbart.

JP 2003 216 058 A offenbart eine verschiebliche Aufhängung für einen Monitor, wobei der Monitor horizontal verschoben werden kann oder sowohl horizontal wie auch vertikal. Dabei können für die horizontale Verschiebung u-förmige Schienen übereinander angeordnet werden, in denen der Monitor auf Rollen geführt wird. In der unteren Schiene laufen die Räder mit einer horizontalliegenden Achse und tragen so den Monitor, während in der oberen Schiene die Räder mit einer senkrechtstehenden Achse dazu ausgelegt sind, ein Verkippen des Monitors zu vermeiden.

Beim Einsatz von einer Mehrzahl Monitore spielt oftmals die Orientierung der Monitore eine Rolle. Je nach Präsentationszweck können entsprechende Monitore im Hochformat oder Querformat angeordnet werden. Da die Monitore im Regelfall an die Halterungen fest angeschraubt sind, ist es relativ aufwendig, die Orientierung und relative Anordnung der Monitore zueinander zu verändern, ohne jeden Monitor einzeln demontieren und wieder montieren zu müssen. Für diesen Umrüstvorgang wird viel Zeit und Aufwand benötigt, insbesondere wenn eine Vielzahl Monitore an der Halterung angebracht sind.

EP 1 584 857 A2 offenbart eine Halterung, bei der die Monitore in horizontaler Richtung auf Gleitschienen verschoben werden können, wobei die Halterung auch eine Drehmimik umfasst, mit der der Monitor auch um eine Achse senkrecht zur Monitorfläche gedreht werden kann. Nachteil der Anordnung ist, dass die Bewegungen schwer durchzuführen sind, da dazu der Monitor leicht angehoben werden muss, um den Gleiter von einer Bremsfläche abzuheben, ehe er verschoben werden kann.

Die vorliegende Erfindung hat sich zur Aufgabe gemacht, eine Halterung für Monitore anzugeben, mit welcher ein aufwändiges Montieren und Demontieren der Monitore entfällt und die Monitore leicht beweglich sind.

Gelöst wird diese Aufgabe durch eine Halterung mit den Merkmalen des Anspruchs 1. Vorteilhafte Ausführungsformen finden sich in den abhängigen Ansprüchen.

Die erfindungsgemäße Halterung für Monitore weist eine Mehrzahl Montageabschnitte auf, welche zur Aufnahme von jeweils wenigstens einem Monitor ausgebildet sind. Die Montageabschnitte umfassen wiederum Befestigungselemente, welche zum Anbringen an der Rückseite eines Monitors dienen. Die Befestigungselemente können zum Beispiel so ausgebildet sein, dass sie VESA-kompatible Bohrungen oder Schrauben aufweisen. Die Montageabschnitte sind ihrerseits an einem zur Halterung gehörenden Träger angeordnet und an diesem schlittenartig verschieblich geführt.

Hierdurch können die Monitore relativ zueinander an der Halterung verschoben werden. Eine Demontage der Monitore ist hierzu nicht erforderlich. Sind die Befestigungsabschnitte der Monitore selbst gegenüber dem Rest der Monitore drehbar, so können die Monitore in der Grundkonfiguration der Halterung nach dem Auseinanderschieben auch in ihrer Orientierung verändert werden. Anschließend können die Monitore wieder in die gewünschte Verschiebelage relativ zueinander verbracht werden. Auch das Ändern der Orientierung bedarf also keiner aufwändigen Demontage. Sofern die Monitore selbst keine eigene "Drehfunktion" mitbringen, kann eine entsprechende Drehmöglichkeit auf an der erfindungsgemäßen Halterung verwirklicht sein.

Um das Verschieben der einzelnen Monitore mithilfe des Verschiebens der Montageabschnitte möglichst reibungsarm durchführen zu können, ist erfindungsgemäß vorgesehen, dass die Montageabschnitte über in Führungen geführte Rollen an dem Träger geführt sind. Solche Rollenführungen lassen sich einfach installieren und die Zahl der benötigten Rollen entsprechend der benötigten Traglast auswählen.

Als weitere Maßnahme wird die Form der verwendeten Führungen so gewählt, dass ein Verkippen oder Verkanten nicht möglich ist. Hierzu kann vorgesehen sein, dass die Führungen im zu ihrer Führungsrichtung senkrechten Schnittbild eine etwa C-förmige Profilform aufweisen. Auf diese Weise lassen sich darin Rollen verhältnismäßig formschlüssig führen, sodass ein Ausweichen und damit das zu verhindernde Verkippen oder Verkanten nicht mehr möglich ist, da insoweit auch die Rollen in der Führung kaum Spiel aufweisen.

Dabei ist vorgesehen, dass die beiden Schenkel der C-förmigen Profilform der Führungen jeweils v-förmig zueinander abgewinkelte und/oder formschlüssig an das Profil der Führungsrollen ausgebildete Anlagebereiche aufweisen, an denen die darin geführten Führungsrollen anliegen. Dies hat den Vorteil, dass der Anlagebereich zwischen Rolle und Führung und damit die Reibung zwischen Rolle und Führung minimiert wird, da die Rollen eben nur tangential an der Führung und nicht mit ihrer gesamten Oberfläche anliegen.

Es kann vorgesehen sein, dass die Befestigungselemente gegenüber den jeweiligen, insbesondere als Schlitten ausgebildeten, Montageabschnitten um eine Drehachse drehbar gelagert sind. Da die Monitore zumindest über eine Netzversorgung verfügen müssen, muss diese bis zum entsprechenden Netzausgang des jeweiligen Monitors geführt werden. Beim Verdrehen der Monitore spielt natürlich die Kabellänge eine Rolle, da sich die Kabellänge unter Umständen verändert, wenn ein Monitor aus einer horizontalen in eine vertikale Position verbracht wird. Bevorzugt ist zur Kompensation vorgesehen, dass die Halterung für jeden Monitor eine Kabeldurchführung aufweist, welche Kabel, das können beispielsweise Netzkabel, Netzwerkkabel oder Audio/Videokabel sein, zum an den Befestigungselementen zu befestigenden Monitor führt. Eine entsprechende Kabeldurchführung ist dabei im Wesentlichen im Bereich der Drehachse angeordnet. Werden die zugeführten Kabel nämlich im Bereich der Drehachse geführt, im Idealfall durch die Drehachse, so ergeben sich beim Verdrehen keine oder nur geringe Längenänderungen, sodass man nicht Gefahr läuft, dass beim Verdrehen ein Kabel gedehnt oder im ungünstigsten Fall sogar aus einem entsprechenden Eingang herausgezogen oder beschädigt wird.

Nach einer vorteilhaften Ausführungsform der vorliegenden Erfindung kann insbesondere vorgesehen sein, dass an den Montageabschnitten jeweils ein Endabschnitt einer Kabelkette angebracht ist. Aufgrund der Verschiebung der Montageabschnitte ergibt sich für die Kabelzuführung zwangsläufig, dass Kabel mit entsprechender Länge vorgesehen sein müssen, damit die Verschiebung reibungslos funktioniert. Die Kompensation erreicht man am besten durch das Vorsehen einer Kabelkette, die am Träger geführt wird und mit einem Ende am entsprechenden Montageabschnitt befestigt ist. Ein aus diesem Ende herausstehendes Kabel kann dann an den zugehörigen Monitor angeschlossen werden. Bei Verschieben der Montageabschnitte wird die Kabelkette gestreckt bzw. gestaucht, ohne dass sie das Verschieben behindert. Dies sorgt auch für eine Zugentlastung aller verwendeten Kabel und Anschlüsse an die entsprechenden Monitore. Das andere Ende einer Kabelkette kann beispielsweise aus dem Träger herausgeführt oder mit einem am Träger angebrachten Verteiler verbunden werden.

Um ein Verkanten oder Verkippen der Monitore zu verhindern, kann einerseits vorgesehen sein, dass die Rollen und die zugehörigen Führungen, insbesondere in Richtung vertikal zum Boden, voneinander beabstandet angeordnet sind. Es ist dabei zunächst einmal unbeachtlich, an welchem Bauteil die Rollen und an welchem Bauteil die Führungen angeordnet sind. Beispielsweise können die Rollen an den Montageabschnitten gelagert und die zugehörigen Führungen am Träger angeordnet sein.

Bevorzugt ist die oben beschriebene Halterung Teil einer Monitoranordnung, welche neben der Halterung eine Mehrzahl daran befestigter Monitore umfasst, wobei die Monitore gegenüber den zugehörigen Befestigungselementen drehbar gelagert sind.

Es versteht sich von selbst, dass die Bewegung der Monitore durch Bewegen der Montageabschnitte und/oder die Drehung der Monitore sowohl manuell als auch über einen entsprechenden Verstellantrieb realisiert werden können. Nach einer bevorzugten Ausführungsform umfasst die Halterung/die Monitoranordnung demzufolge wenigstens einen elektrischen Antrieb oder mehrere, gegebenenfalls synchronisierte, elektrische Antriebe, mit deren Hilfe die Montageabschnitte relativ zum Träger verschoben und/oder die Monitore relativ zum Träger gedreht werden können.

Die Erfindung wird nachfolgend anhand des in den Figuren 1-5 dargestellten Ausführungsbeispiels näher erläutert.
- Figur 1: - zeigt eine perspektivische Ansicht auf eine Monitoranordnung gemäß der vorliegenden Erfindung.
- Figur 2: - zeigt eine erfindungsgemäße Halterung für Monitore in perspektivische Ansicht.
- In den Figuren 3A bis 3E: ist eine Bildsequenz dargestellt, die die Versteckmöglichkeiten der erfindungsgemäßen Halterung bzw. Monitoranordnung veranschaulicht.
- Figur 4: - ist eine Schnittansicht durch eine erfindungsgemäße Monitoranordnung.
- Figur 5: - zeigt eine Schnittansicht durch eine erfindungsgemäße Halterung mit Drehmöglichkeit.

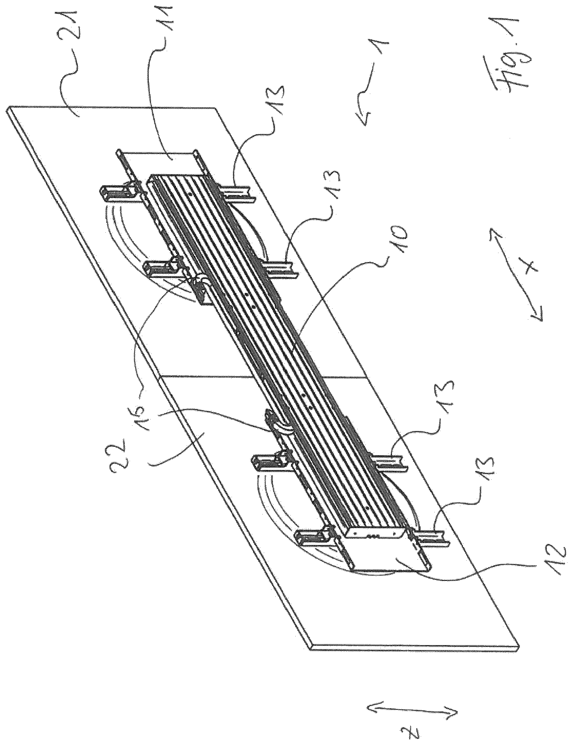

In Figur 1 ist eine erfindungsgemäße Monitoranordnung von der Rückseite gezeigt. Diese umfasst die erfindungsgemäße Halterung 1 sowie daran befestigte Monitore 21 und 22. Grundsätzlich kann die Anzahl der Monitore beliebig groß sein, der Umstand, dass in den hier diskutierten Abbildungen lediglich zwei Monitore gezeigt sind, soll die Anwendung der vorliegenden Erfindung nicht auf zwei Monitore beschränken. Die nachfolgende Beschreibung gilt sinngemäß für eine beliebige Anzahl von Monitoren, solange die Anzahl zwei oder mehr beträgt.

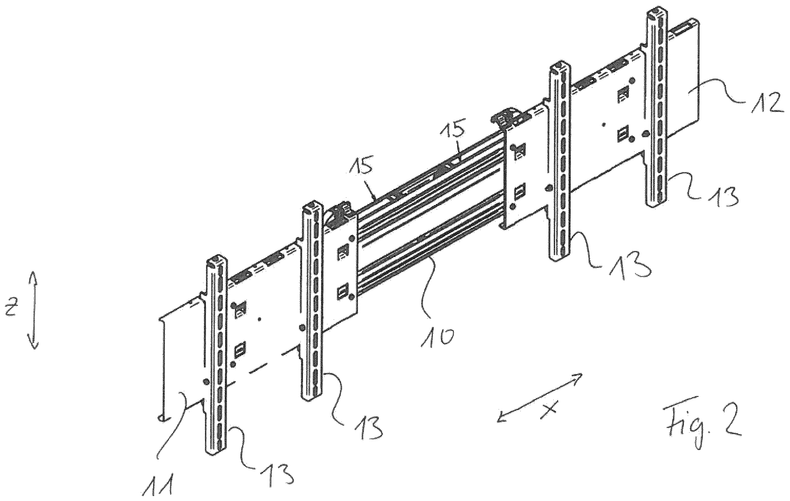

Z bezeichnet die Vertikalrichtung, die beispielhaft eine Richtung senkrecht zum hier nicht gezeigten Boden bezeichnet. Die Richtung X ist dazu senkrecht und bezeichnet hier die Verschieberichtung der Monitore, bzw. auch die Verlaufsrichtung oder Hauptlängserstreckungsrichtung des Trägers 10. Am Träger 10 sind Montageabschnitte 11 und 12 schlittenartig verschieblich gelagert. An den Montageabschnitten 11 und 12 sind die Monitore 21 bzw. 22 befestigt. Im gezeigten Beispiel geschieht dies über Befestigungsabschnitte 13, die im einfachsten Fall an der Rückseite des jeweiligen Monitors 21 bzw. 22 angeschraubt oder sonst wie befestigt sind. Die Befestigungsabschnitte 13 können einstückig mit den Montageabschnitten 11 bzw. 12 ausgebildet oder mit diesen auf sonstige Weise verbunden sein. Im gezeigten Beispiel sind sie durch Einhängen an den Montageabschnitten 11, 12 befestigt. Letzteres ist in der Frontansicht auf die Halterung Figur 2 etwas besser zu sehen. Bezugszeichen 15 bezeichnet Kabelketten, die optional jeweils an einem Montageabschnitt 11 bzw. 12 angebracht sein können. Die Kabelketten 15 sind im Übrigen bevorzugt in einem im Träger 10 vorgesehenen oder zwischen Träger 10 und Montageabschnitten 11, 12 gebildeten Aufnahmeraum geführt. Die befestigten Monitore 21, 22 sind bevorzugt nicht nur zusammen mit den Montageabschnitten 11 bzw. 12 verschieblich gelagert, sondern können auch gedreht werden, entweder durch einen an der Halterung 1 vorgesehenen Drehmechanismus, der eine Drehung der Befestigungsabschnitte 13 gegenüber den Montageabschnitten 11 bzw. 12 ermöglicht. Alternativ kann auch im Monitor auf der Rückseite ein entsprechender Drehteller oder dergleichen vorgesehen sein, an welchem die Befestigungsabschnitte 13 angeschraubt oder sonst wie befestigt werden können.

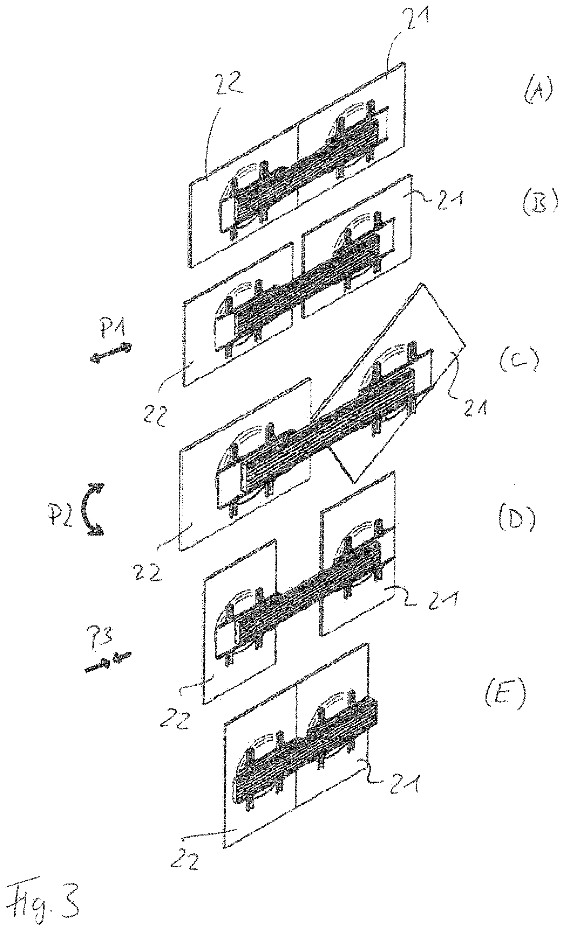

Beispielhaft verdeutlicht die Bildsequenz der Figuren 3A bis 3E einen typischen Anwendungsfall der erfindungsgemäßen Monitoranordnung.

Im Ausgangszustand (Figur 3A) befinden sich beide Monitore 21 bzw. 22 in Horizontalausrichtung nebeneinander und stoßen mit ihren Schmalseiten unter Umständen sogar aneinander an. Theoretisch ist denkbar, über solche direkt nebeneinander befindlichen Monitore auch Netz- oder Bildsignale über an den Schmalseiten der jeweiligen Monitore befindliche Schnittstellen zu übertragen.

Sollen die Monitore anders angeordnet werden, so werden zunächst, wie in Figur 3B gezeigt, die Monitore 21 bzw. 22 entlang des Trägers durch relatives Verschieben auseinander bewegt (Pfeil P1).

Im darauffolgenden Schritt können beide Monitore (Pfeilrichtung P2) beispielsweise in die Vertikalstellung gedreht werden (Figur 3C und 3D). Wie in Figur 3D zu sehen, liegen beide Monitore 21 und 22 dann in einem gewissen Abstand voneinander und können dann durch Verschieben der beiden Monitore (Pfeilrichtung P3) wieder zusammengeführt werden, sodass sich ein entsprechend größerer Bildschirm in gegenüber der Ausgangslage von Figur 3A anderem Format ergibt, Figur 3E.

Auf diese Weise ist es möglich, die Monitore 21, 22 in beliebigen Stellungen relativ zueinander anzuordnen. Natürlich gilt dieses auch gleichermaßen für Anordnungen, die mehr als zwei Monitore aufweisen.

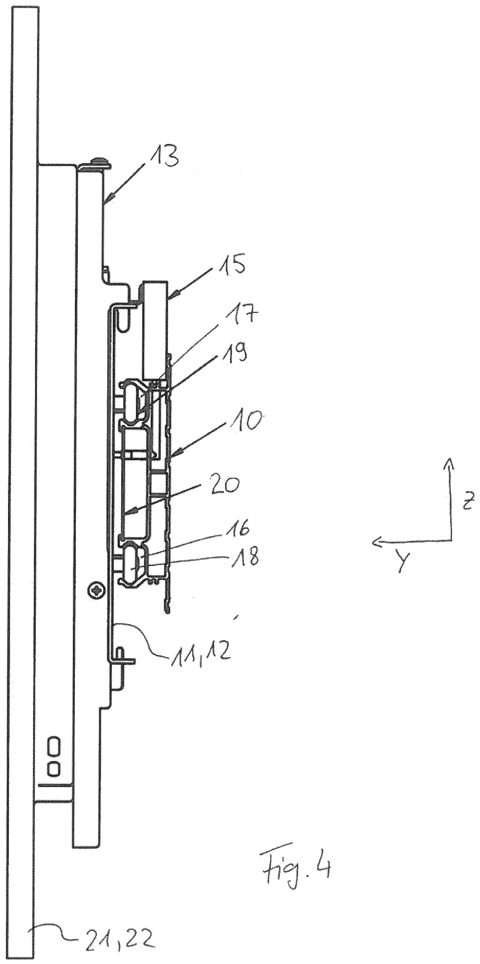

In der Figur 4 ist eine Schnittansicht durch eine beispielhafte erfindungsgemäße Ausführungsform der erfindungsgemäßen Halterung bzw. Monitoranordnung gezeigt. Y bezeichnet eine Richtung, die senkrecht zur Vertikalrichtung Z und der Verlaufsrichtung X des Trägers 10 verläuft. Zu erkennen ist ein Monitor 21, 22, welcher an Befestigungselementen 13 befestigt ist. Dies kann mit einem VESA-Adapter oder dergleichen erfolgen. Die Befestigungselemente 13 sind an den Montageabschnitten 11, 12 angebracht, beispielsweise eingehängt. Die Montageabschnitte 11, 12 umfassen vorzugsweise einen plattenartigen Abschnitt, an welchem in unterschiedlichen Höhenpositionen (bezogen hier auf die vertikale Richtung Z) Rollen 18, 19 gelagert sind. Die Zahl der Rollen hängt von der zu tragenden Last ab, die im Wesentlichen durch das Eigengewicht der Monitore 21, 22 bestimmt wird.

In Richtung X (in dieser Abbildung nicht gezeigt) können deshalb an einem Montageabschnitt 11, 12 eine Mehrzahl beabstandete Rollen angeordnet sein. Die Rollen 18, 19 sind ihrerseits in entsprechenden in Richtung X verlaufenden und bevorzugt am Träger 10 angeordneten Führungen 16, 17 geführt. Wie im gezeigten Beispiel dargestellt, sind die Führungen 16, 17 bevorzugt in der dargestellten Zeichenebene im Querschnitt etwa C-förmig ausgebildet, wobei die beiden gegenüberliegenden Schenkel der C-Form zueinander mehr oder weniger v-förmig zueinander angestellte, abgewinkelte Anlageabschnitte aufweisen, an welchen sich die jeweiligen Rollen 18, 19 abstützen. Dadurch wird eine weitgehend tangentiale Anlage zwischen der gekrümmten Oberfläche der Rollen und den Anlageabschnitten der Führung erreicht, wodurch eine möglichst reibungsarme Lagerung der Rollen in der Führung erzielt wird. Gleichzeitig führt die genannte Form der Führung dazu, dass die Rolle in der Führung ständig zentriert wird, sodass kein Spiel entsteht, wodurch die Rolle in der Führung und damit der Monitor verkippen könnte. Hier kann man auch die in den Figuren 1 und 2 angedeutete Kabelkette 15 erkennen, welche bevorzugt am Montageabschnitt 11, 12 befestigt und zwischen Montageabschnitt 11, 12 und Träger 10 geführt ist, der dazu einen Kabelkanal aufweist oder als solcher ausgebildet ist. Eine Blende 20 kann vorgesehen sein, um einen solchen Kabelkanal zu schließen und zu verhindern, dass darin geführte Kabel heraushängen. Die Blende kann z. B. ein Streifen aus Blech oder Kunststoff sein, der in das Profil des Trägers 10 oder eines anderen Bauteils, insbesondere in das Hauptprofil eines am Träger 10 montierten Kabelkanals, eingeschoben wird.

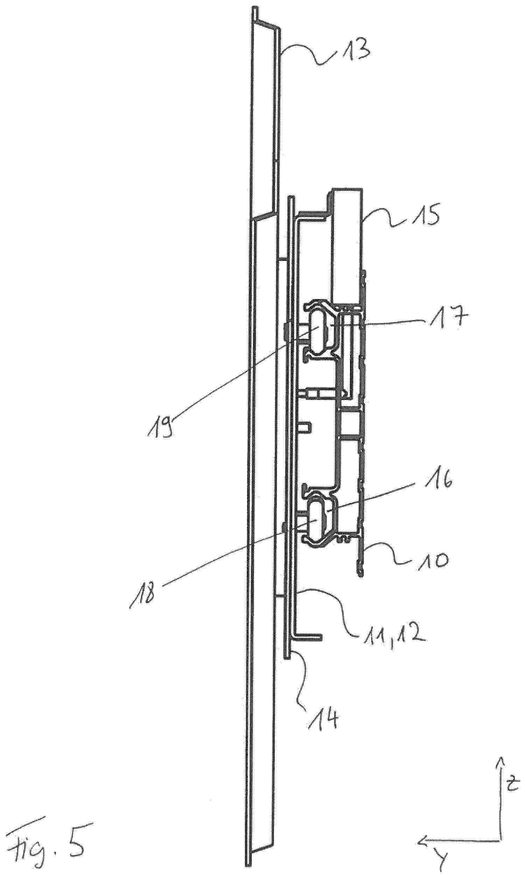

In dem in Figur 5 dargestellten Ausführungsbeispiel gilt entsprechendes. Im Unterschied zum Ausführungsbeispiel der Figur 4 beinhaltet die erfindungsgemäße Halterung hier zusätzlich eine Drehmöglichkeit. Das hier bevorzugt plattenartige Befestigungselement 13 ist hier gegenüber einem am Montageabschnitt 11, 12 angeflanschten Lagerabschnitt 14 drehbar ausgebildet.

## Patentansprüche

1. Halterung (1) für Monitore (21, 22), aufweisend eine Mehrzahl von Montageabschnitten (11, 12) zur Aufnahme von jeweils wenigstens einem Monitor (21, 22), wobei die Montageabschnitte (11, 12) Befestigungselemente (13) zum Anbringen an der Rückseite eines Monitors (21, 22) umfassen, wobei weiter die Montageabschnitte (11, 12) an einem Träger (10) angeordnet und an diesem schlittenartig verschieblich geführt sind, **dadurch gekennzeichnet, dass** die Montageabschnitte (11, 12) über in Führungen (16, 17) geführte Rollen (18, 19) an dem Träger (10) geführt sind und wobei die Führungen im zu ihrer Führungsrichtung (X) senkrechten Schnittbild eine etwa C-förmige Profilform aufweisen, wobei die beiden Schenkel der C-förmigen Profilform der Führungen (16, 17) jeweils v-förmig zueinander abgewinkelte und/oder formschlüssig mit dem Profil der Führungsrollen (18, 19) ausgebildete Anlagebereiche aufweisen, an denen die darin geführten Führungsrollen (18, 19) anliegen.

2. Halterung (1) nach Anspruch 1,
**dadurch gekennzeichnet,**
**dass** an den Montageabschnitten (11, 12) jeweils ein Endabschnitt einer Kabelkette (15) angebracht ist.

3. Halterung (1) nach Anspruch 1 oder 2,
**dadurch gekennzeichnet,**
**dass** die Rollen (18, 19) und die zugehörigen Führungen (16, 17), insbesondere in Richtung (Z) vertikal zum Boden, voneinander beabstandet angeordnet sind.

4. Halterung (1) nach einem der vorigen Ansprüche,
**dadurch gekennzeichnet,**
**dass** die Rollen (18, 19) an den Montageabschnitten (11, 12) gelagert und die zugehörigen Führungen (16, 17) am Träger (10) angeordnet sind.

5. Halterung (1) nach einem der vorigen Ansprüche,
**dadurch gekennzeichnet,**
**dass** die Befestigungselemente (13) gegenüber den jeweiligen Montageabschnitten (11, 12) um eine Drehachse drehbar gelagert sind,

6. Halterung (1) nach Anspruch 5,
**dadurch gekennzeichnet,**
**dass** eine Kabeldurchführung vorgesehen ist, welche Kabel zum an den Befestigungselementen (13) zu befestigenden Monitor (21, 22) führt und welche im Wesentlichen im Bereich der Drehachse angeordnet ist.

7. Monitoranordnung, umfassend eine Halterung (1) nach einem der vorigen Ansprüche und eine Mehrzahl daran befestigter Monitore (21, 22), wobei die Monitore (21, 22) gegenüber den zugehörigen Befestigungselementen (13) drehbar gelagert sind.

## Claims

1. Mount (1) for monitors (21, 22), comprising a plurality of mounting portions (11, 12) for receiving at least one monitor (21, 22) each wherein the mounting portions (11, 12) comprise fastening elements (13) for attaching to the reverse side of a monitor (21, 22), wherein the mounting portions (11, 12) are further arranged on a support (10) and are guided in sliding displacement thereon,
**characterised in**
**that** the mounting portions (11, 12) are guided on the support (10) via rollers (18, 19) which are guided in guides (16, 17) and wherein the guides have an approximately C-shaped profile form in a sectional view perpendicular to their guiding direction (X) wherein the two arms of the C-shaped profile form of the guides (16, 17) each have bearing regions which are angled in a V-shape manner relative to one another and/or which are configured for form-fitting engagement with the profile of the guide rollers (18, 19), wherein the guide rollers (18, 19) guided in the guides bear against the contact bearing regions.

2. Mount (1) according to claim 1,
**characterised in**
**that** one end section each of a cable chain (15) is attached to the mounting portions (11, 12).

3. Mount (1) according to claim 1 or 2,
**characterised in**
**that** the rollers (18, 19) and the associated guides (16, 17) are arranged at a distance from one another, in particular in a direction (Z) vertical to the base.

4. Mount (1) according to one of the preceding claims,
**characterised in**
**that** the rollers (18, 19) are arranged on the mount portions (11, 12) and the associated guides (16, 17) are arranged on the support (10).

5. Mount (1) according to one of the preceding claims,
**characterised in**
**that** the fastening elements (13) are mounted for rotation about an axis of rotation relative to the associated mount portions (11, 12).

6. Mount (1) according to claim 5,
**characterised in**
**that** a full-length cable guide is provided which leads the cable to the monitor (21,22) which is to be fastened to the fastening elements (13), with the cable guide being arranged substantially in the region of the axis of rotation.

7. Monitor arrangement, comprising a mount (1)
according to one of the preceding claims, and a plurality of monitors (21, 22) fastened thereon wherein the monitors (21, 22) are mounted for rotation relative to the associated fastening elements (13).

## Revendications

1. Fixation (1) pour des écrans (21, 22), comportant une pluralité de sections de montage (11, 12) pour recevoir au moins un écran (21, 22) chacun, dans laquelle les sections de montage (11, 12) comportent des éléments de fixation (13) pour le montage à la face arrière d'un écran (21, 22), dans laquelle en outre les sections de montage (11, 12) sont agencées sur un support (10) et sont guidées sur celui-ci en coulissement à la manière d'un chariot, **caractérisé en ce**
**que** les sections de montage (11, 12) sont guidées sur le support (10) par des galets (18, 19) guidés dans des guidages, et dans laquelle les guidages comportent une forme profilée approximativement en forme de C dans la coupe transversale verticale par rapport à leur direction de guidage (X), dans laquelle les deux branches de la forme profilée en forme de C des guidages (16, 17) comportent chacune des zones d'appui formant un angle en forme de v l'une par rapport à l'autre et/ou étant à engagement positif avec le profil des galets de guidage (18, 19), dans laquelle les galets de guidage (18, 19) y guidés adhèrent uniformément aux zones d'appui.

2. Fixation (1) selon la revendication 1,
**caractérisé en ce**
**que** sur les sections de montage (11, 12) chacune une section terminale d'une chaîne de guidage de câble (15) est montée.

3. Fixation (1) selon la revendication 1 ou 2,
**caractérisé en ce**
**que** les galets (18, 19) et les guidages associés (16, 17), surtout dans une direction (Z) verticale par rapport au sol, sont agencés espacés les uns des autres.

4. Fixation (1) selon l'une quelconque des revendications précédentes,
**caractérisé en ce**
**que** les galets (18, 19) sont logés aux sections de montage (11, 12), et les guidages associés (16, 17) sont agencés au support (10).

5. Fixation (1) selon l'une quelconque des revendications précédentes,
**caractérisé en ce**
**que** les éléments de fixation (13) sont pivotants autour d'un axe de rotation par rapport aux sections de montage respectives (11, 12).

6. Fixation (1) selon la revendication 5,
**caractérisé en ce**
**qu'**une traversée de câbles est prévue, qui conduit des câbles à l'écran (21, 22) à fixer aux éléments de fixation (13), est qui est agencée sensiblement dans la zone de l'axe de rotation.

7. Ensemble d'écrans, comportant une fixation (1) selon l'une quelconque des revendications précédentes, et une pluralité d'écrans (21, 22) y fixée, dans lequel les écrans (21, 22) sont pivotants par rapport aux éléments de fixation associés (13).
